Europäisches Patentamt

European Patent Office

Office européen des brevets

(11) Publication number: 0 484 836 A1

# EUROPEAN PATENT APPLICATION

(21) Application number: 91118685.6

(22) Date of filing: 02.11.91

(51) Int. Cl.5: C03B 21/04

(30) Priority: 08.11.90 US 610670

(43) Date of publication of application:
13.05.92 Bulletin 92/20

(84) Designated Contracting States:
BE DE ES FR GB IT SE

(71) Applicant: PPG INDUSTRIES, INC.
One PPG Place
Pittsburgh Pennsylvania 15272(US)

(72) Inventor: Bricker, Jack Allen
1130 Park Street
Tarentum, Pa. 15084(US)
Inventor: May, Earl Layton
124 Stratford Drive
Irwin, Pa. 15642(US)

(74) Representative: Sternagel, Hans-Günther, Dr.
et al
Patentanwalte Dr. Michael Hann, Dr. H.-G.
Sternagel, Dr. H. Dörries, Sander Aue 30
W-5060 Bergisch Gladbach 2(DE)

(54) Method for punching holes in glass.

(57) A method of punching a hole of a given shape and a given area through a thickness of a glass sheet comprising heating the given area to a temperature higher than the overall temperature of the glass sheet which is in a temperature range approximating the annealing range of the glass sheet, developing a temperature in the perimeter of the given area of at least the softening temperature of the glass sheet by directly exposing a target portion of spaced from the perimeter of said given area for a brief time to flames that heat the target portion to a temperature above the softening temperature range and develop a decreasing temperature gradient through the given area perimeter such that it is within a temperature range whose minimum is the softening temperature and maximum is below the reboil temperature and driving a punch having an outline conforming to that of the given area through the thickness of the glass sheet at the given area before the perimeter cools to below said softening temperature. After punching, an optional step includes fire polishing a lower edge corner to reduce the size of a bulbed shape that forms as a result of the punching step and to smooth the lower edge.

FIG. 1

EP 0 484 836 A1

## BACKGROUND Of THE INVENTION

### Field of the Invention

This invention relates to punching holes through the thickness of glass or other fragile refractory materials, preferably in sheet form, primarily to form apertured glass sheets, but also may relate to the formation of plugs removed from the holes punched through the glass.

### Technical Consideration

Holes have been drilled or punched through glass sheets, primarily by a high speed rotation of a diamond or a core drill that applies pressure against one major surface of a glass sheet and is forced to penetrate the glass to the other major surface. Unfortunately, the opposite surface from the one in which the glass is penetrated is very weak due to the formation of chips and cracks in the glass in the vicinity of the hole, particularly about the periphery about the hole that is formed by the drilling. It is known to fire polish the chipped and cracked portion to make the appearance of the glass more uniform and also to improve the strength of the glass in the vicinity of the hole.

Fire polishing the glass locally in the region of its defects, such as the cracks and spalls, is accomplished by applying high temperature burning gas to the portion of the glass sheet whose strength is to be increased. However, operating parameters such as the temperature of the burning gases that are applied to the glass, the distance of the burners to the glass, and the rate of application of the burning gas to the glass must be carefully controlled. If the glass is not heated sufficiently throughout its extent, the higher temperature of the local area to be strengthened causes a steep thermal gradient which is likely to cause fracture. Furthermore, if the glass is heated to too high an elevated temperature, a phenomena known as "reboil" and "bubbling" take place. These spoil the optical and mechanical properties of the glass.

Various alternative drilling techniques have been developed which prevent the drill from penetrating in one direction completely from one major surface through the opposite major surface to avoid the formation of chips and cracks where the drill passes through the opposite major surface of the glass from which the drill enters the glass. Drilling in one direction through part of the glass sheet thickness and then in the opposite direction for the rest of the thickness leaves internal chips and cracks between the major surfaces as well as cracks at both major surfaces. These chips and cracks are not as destructive as those produced by one-way drilling through the entire glass thickness, but still cause the glass to lack desired strength where weakened by drilling.

While the temperature parameters to be discussed hereinafter may vary somewhat depending upon the glass composition, the development of this invention was made with soda-lime-silica float glass and the temperature ranges discussed later are for such float glass. The temperature of the main body of the glass sheet and the temperature of the glass in the vicinity of the hole to be drilled are criteria that determine success of the present invention as compared to the results obtained in the prior art.

It was known prior to the present invention to heat the overall glass sheet to at least the vicinity of its strain point temperature and preferably to the annealing point to enable stresses in the glass along the line of drilling to be redistributed rapidly enough to reduce the possibility of venting at the cut line. However, if the glass were heated to too high a temperature at the cut line, it distorted and developed bubbles and uncontrolled bulbing at the upper and lower major surfaces where the hole was formed in the hot glass. Furthermore, the necessity to control the temperature of different portions of the glass, particularly the temperature pattern away from the vicinity of the outline of the hole that is cut, was not appreciated in the prior art, considering the sophistication available prior to this invention.

### Patents of Interest

U.S. Patent No. 2,989,046 to Zimmerman drills a hole through a portion of the thickness of the glass sheet from one major surface, coats the opposite major surface and then sandblasts the opposite surface through an aperture in a template that is in axial alignment with the partially drilled hole in order to minimize the cracking or chipping of the hole so formed. This technique is cumbersome and expensive and is not suitable for a high-speed mass production operation.

U.S. Patent No. 3,710,516 to Kelly attempts to reduce the defects formed in diamond drilling of holes through glass by drilling the hole at a controlled speed and constant forward rate of advance. No mention is made of heating the glass to its strain point in this patent.

U.S. Patent No. 4,297,059 to Miyanaga shows a glass boring tool provided with stop means to prevent the tool from penetrating through the entire thickness of the glass during a hole drilling operation. No mention is made of heating the glass to be drilled.

U.S. Patent No. 4,824,712 to Falleroni and Lin coats a glass sheet in a region scored by a drill with a composition that gels, densifies, and ultimately forms a glassy film over the exposed surface during further thermal processing of the glass sheet to heal any vents or other defects that form on the wall of the hole.

U.S. Patent No. 4,828,900 to Mouly discloses a method and apparatus for severing a sheet from a continuous ribbon and shaping the edge of the severed sheet comprising heating the ribbon to its softening temperature along a desired line of cut and cutting the heated ribbon while the temperature in the vicinity of the desired line of cutting in directions away from the cut line is controlled at a temperature it can be handled without marking or otherwise affecting the optical quality of the glass. The line of cut developed in the Mouly patent may be straight or non-linear. However, it is difficult to control a heating step along a line of cut that is a continuous perimeter of a plug removed from a glass sheet or ribbon when the line of cut is directly exposed to gas flames.

German Patent No. 2,548,748 drills a hole through the thickness of the glass sheet by preheating the area of the circumference of drilling almost to the melting temperature of the glass. A heated drilling tool having an outline shape that corresponds to the hole at its cutting edge is heated to a temperature greater than the glass melting temperature and pressured through the thickness of the glass to melt the glass and form the hole by melting and removing a plug of glass within the melted perimeter that is so formed. Such a technique is too slow for desired mass production and also develops glass bulbing, characterized by circular hills on each major surface of the glass surrounding the drill opening.

## A BRIEF DESCRIPTION OF THIS INVENTION

The parameters developed for this invention were based on working with soda-lime-silica float glass. It is understood that the parameters may vary somewhat using different compositions and different thicknesses and difference sizes of holes and the shape of the hole.

A definition needed for understanding this invention is the term "softening temperature." When a glass sheet is at its softening temperature throughout its thickness, the glass can be penetrated with a punching device through its thickness to sever a plug of glass from the remainder of the sheet without conventional mechanical scoring and fracturing techniques. For soda-lime-silica float glass, the softening temperature range is generally in the range of about 1325°F. to 1375°F. (718°C. to 746°C.). Another important temperature is the so-called "reboil temperature" of the glass, which for float glass generally ranges between 2200°F. and 2550°F. (1204°C. to 1399°C.) and at which the glass bubbles.

The glass sheet is maintained at a temperature which will ensure that the sheet can equalize any internal stresses within the glass where it is locally heated. In addition, the sheet is maintained at a temperature at which it can be handled without marking or otherwise adversely affecting its optical properties. In a preferred embodiment of the invention, the entire sheet is preheated to a temperature range from about 850°F. (454°C.) to the upper limit of the annealing range of the glass sheet, the latter being about 1040°F. (560°C.) for float glass.

According to this invention, a hole of a given shape is formed by penetrating a punch through the thickness of a glass sheet in a given area. The entire sheet is first preheated to a temperature range up from about 850°F. (454°C.) to the top of the annealing range of the glass sheet. The glass sheet is preferably supported in an essentially horizontal plane so that the glass sheet is oriented to have a top major surface and a bottom major surface. The given area to be removed is aligned axially between a pair of gas burners arranged to face the top and bottom major surfaces of the given area and to impinge flames having an outline conforming to a target portion spaced from the outline of the given area by a minimum of 0.010 inches (0.254 mm.) against the major surfaces for a limited time, to heat the target portion as rapidly as possible. Heat is conducted away from the target portion through the glass to the outline of the given area to raise the temperature at the given area perimeter to at least the softening temperature range so that the perimeter of the given area becomes susceptible to easy penetration by a punch. The gas burners are removed from the glass sheet and a punch having an outline conforming to that of the given area is aligned with the given area. The punch is immediately driven through the thickness of the given area before the perimeter of the given area cools below the softening temperature range, to remove a plug having the given area from the glass sheet and form the hole desired.

When a glass sheet is punched through a given area to form an apertured glass sheet, the concentration of heat is applied to a target portion within the given area for just sufficient time to enable interior conduction of heat within the glass from the target portion to the perimeter of the given area to raise the temperature along the given area perimeter to the glass softening temperature range during said short period of intense heating. At the time of the punching step that immediately follows the intense concentrated heating step, the portion of the glass sheet surrounding the given area perimeter has insufficient time to develop a temperature at which the defects in the glass can occur. More particularly, the hole heating step uses flames of smaller cross-section than the given area aligned with the punch which results in holes having straight walls instead of convexly bowed walls between the major surfaces, a smoothly curved upper edge corner between the upper major surface of the glass sheet and a hole having reduced bulbing at the bottom edge corner between the hole and the lower major surface of the glass sheet as compared to a hole heating step which uses burners that apply burning gases directly to the perimeter of the given area (or cut line) as in the prior art. A "soft burner flame" may be applied only to the bottom edge corner, if needed at all, to reduce any bulbing present after the punching step and smooth any ragged edge along the hole's perimeter.

A fuel gas/oxygen mixture which develops a temperature that can cause reboil temperatures in the directly exposed target portion of the given area during the intense concentrated hole preheating step does not present any problem as long as the perimeter of the given area and the area beyond the perimeter are not heated to the reboil temperature, because the portion of the given area directly exposed to the flames during said hole preheating step, i.e. the target portion, is part of a plug that is removed from the glass sheet. As a result, any poor properties within the removed plug do not form part of the finished article in this main embodiment. The temperature of the soft burner flame is much less than the temperature applied to the target portion of the given area during the hole preheating step.

When opposing flames impinge for a brief period on the opposite major surfaces of the target portion, the glass temperature develops a pattern that includes a maximum surface temperature at each major surface, decreasing to a minimum temperature at the center of the thickness of the target portion. Continued heating of the glass by the flames is accompanied by the heat radiating out in all directions transverse to the axes of the flames to develop increasing glass temperatures above the annealing range and at least to the softening temperature range where the center of the glass thickness intersects the perimeter of the given area to be removed from the sheet. The area of the glass sheet surrounding the area to be removed must not be hotter than the glass in the perimeter of the given area. The heat applied by the flames is correlated with the duration of heating so that the punch may be applied through the given area when the minimum temperature through the glass sheet thickness at the given area perimeter is at least at the softening temperature range and the maximum temperature through said glass sheet thickness is still below the reboil temperature range. At the moment of punching, the temperature of the glass area beyond the given area perimeter is less than the temperature within the given area perimeter so that the remainder of said glass sheet outside the given area perimeter remains sufficiently hard and is not susceptible to distortion.

Rapid punching through the given area when its perimeter is at the softening point temperature produces a hole having a smooth, rounded corner edge between the top of the hole and the upper major surface of the glass, and a cylindrically shaped hole from upper to lower major surface. This compares with a bulbed upper edge of the hole and a convex wall in elevation along the height of the hole when the temperature of the glass along and immediately outside the given area perimeter is higher than the optimum temperature pattern obtainable from this invention, which is likely to happen when the given area perimeter is directly exposed to flame preheating.

Both the present invention and the prior art causes bulbing at the lower edge corner between the hole and the lower major surface of the glass sheet after punching. However, the degree of bulbing when the punching step follows a flame exposure to a target portion spaced from the given area perimeter is less than the degree of bulbing that results when the punching step follows direct exposure of the given area perimeter to flame. Consequently, a shorter flame polishing step using less intense flame to the bottom surface only reduces the relatively minor bulbing of this invention when compared to more rigorous flame polishing of both upper and lower major surfaces that is needed to overcome the deficiencies that develop in a glass sheet subjected to direct flame exposure throughout the entire perimeter of the given area prior to the punching step.

The principles of this invention may be used to make parts that are essentially the plug portion removed from the glass sheet by a modification of a broad aspect of this invention. More particularly, flames are applied simultaneously along a line spaced outside a perimeter of a given part area to develop a temperature gradient of decreasing temperature from the enclosed area in an inward direction through the perimeter of the part until a temperature pattern similar to but in a direction reversed to the temperature pattern of the perimeter of the given area of the main embodiment results. While the temperature pattern at the perimeter of this modification also includes a minimum temperature in the softening temperature range at the core of the thickness of the given area perimeter and a maximum temperature below the reboil temperature range at the major surfaces, a punch is pushed through the glass thickness sufficiently rapidly to form a plug, i.e. the desired part, from the sheet. The lower temperature of the plug within its perimeter makes it unlikely that the major surfaces of the plug will deviate from smoothness. Fire polishing of the bottom edge corner only of the plug formed where the lower end of the perimeter of the plug meets the bottom major surface of the plug is sufficient often enough to modify any roughness that remains after the punching step.

The benefits of this invention will be understood better in the light of a description of a preferred embodiment that follows.

## BRIEF DESCRIPTION OF THE DRAWINGS

Fig. 1 is an elevational schematic view showing the arrangement of aligned top and bottom burners that directly expose only a target portion within a given area to be removed by punching, in accordance with this invention.

Fig. 2 is a schematic plan view taken along line 2-2 of Fig. 1 illustrating the given area to be removed and the target area within the given area.

Fig. 3 is an elevational schematic view taken at a later stage in the method of this invention showing a punch having an outline conforming to that of the given area as the punch penetrates through the thickness of the glass to remove the given area therefrom.

Fig. 4 is a schematic elevational view of a portion of the glass sheet after the hole has been punched through, showing a ragged edge and minimum bulbing and marking at a bottom edge corner between the hole and the bottom surface of the glass sheet surrounding the hole.

Fig. 5 is a view similar to Fig. 4 showing how fire polishing smooths bottom edge corner and reduces the bulb edge of the glass sheet depicted in Fig. 4.

Fig. 6 is an end view of a multi-hole burner used to provide a "soft" flame to the perimeter of the bottom edge corner of the hole produced by punching.

Fig. 7 is an elevational schematic view similar to Fig. 3 showing an alternate embodiment of the invention.

## DESCRIPTION OF PREFERRED EMBODIMENT

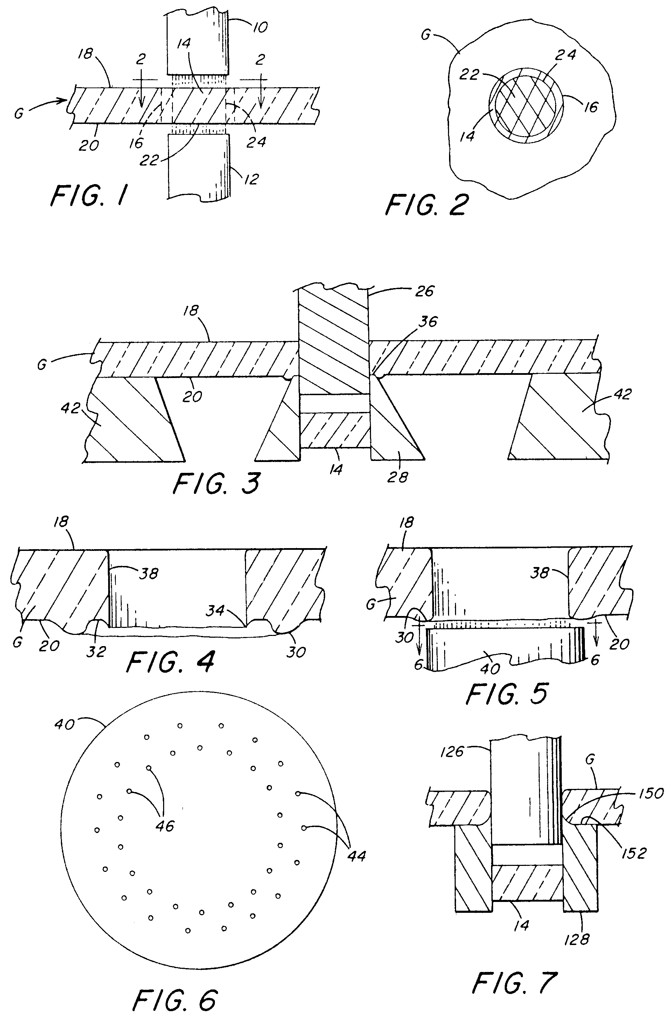

Fig. 1 shows a glass sheet G aligned between a top burner 10 and a bottom burner 12 with a given area 14 defined by perimeter 16 (dashed lines) interposed between said burners. The burners are constructed and arranged to provide flames extending toward the opposite major surfaces of the glass sheet G. Although not limiting in the present invention, in the particular embodiment illustrated in Fig. 1, the glass sheet G is supported in a substantially horizontal plane so that top burner 10 faces the upper major surface 18 of the glass sheet and bottom burner 12 faces the bottom major surface 20 of the glass sheet. The burners are held closely spaced to the major surfaces, roughly between 1/8 inch and 1/4 inch (0.32 cm. and 0.64 cm.) from the top and bottom major surfaces, respectively. The burners are aligned axially with a target portion 22 within the given area 14 to be punched out of the glass sheet G as shown in Fig. 2 (portion 22 being the double cross hatched area within given area 14 which includes the single and double cross hatched areas). The top burner 10 and the bottom burner 12 are constructed and arranged so that the outer portion of the flames directed toward the major surfaces of the glass sheet limit their areas of engagement to the perimeter 24 of the target portion 22, which although not limiting in the present invention is at least 0.100 inch (0.25 cm.) from the perimeter 16 of said given area 14.

Although not limiting in this present invention, in the preferred embodiment, the glass sheet G is preheated to an overall temperature of from about 850°F. (454°C.) to the top of the annealing range of the glass sheet G before the target portion 22 is exposed directly to the flames from burners 10 and 12. This insures that the glass G is sufficiently hard to resist overall deformation and marking and will avoid breakage during additional heating by burners 10 and 12, as will be discussed later, because the heated glass G will have a sufficiently high temperature to equalize internal stresses within the glass G when the target portion 22 of the glass sheet G is heated to an elevated temperature. In addition, the glass sheet will be able to maintain its optical properties.

The given area 14 need not have good optical properties when the object is to provide an apertured glass sheet. Therefore, it is not necessary to limit the temperature of the target portion 22 of the given area 14 due to direct exposure to the flames from top burner 10 and bottom burner 12, which in a fuel gas/oxygen mixture, can be as high as 3500°F. (1927°C.) or hotter, as long as the temperature pattern through the glass thickness is installed. The temperature of the burning gas is reduced by adding more gas than is required for a stoichiometric mixture or by adding air to a gas-oxygen mixture.

As the burners 10 and 12 heat the glass sheet G, heat radiates outwardly from the target portion 22. Exposure to the flames from the burners 10 and 12 is continued for a time sufficient to insure that sufficient heat radiates outwardly from the target portion 22 of the given area 14 so that the perimeter 16 of the given area 14 is heated to a thickness temperature pattern that is at least within softening temperature range of the glass [about 1325°F. to 1375°F. (718°C. to 746°C.)] in the core region of the perimeter 16 but below the reboil temperature range [about 2200°F. to 2550°F. (1204°C. to 1399°C.)] at the surface so that the glass surrounding the hole that remains when the given area 14 is removed will not develop bubbles or reboil. It is also necessary to provide time for the burners 10 and 12 to be removed and a punch 26 and die 28 to be positioned relative to the glass sheet G to form a hole therein as discussed below and as shown in Fig. 3. Punch 26 is preferably of a hardened material with a hardness of between 50-55 Rockwell C.

After a time interval necessary to remove the burners 10 and 12 and replace them with punch 26 and die 28, the temperature in the vicinity of the perimeter 16 of the given area 14 must be at least within the temperature range at which the punch 26 can be readily punched through the thickness of the glass and deposit a plug corresponding to the given area 14 into the die 28, i.e. the perimeter 16 should be within the softening temperature range. The punch 26 and die 28 are aligned with the given area 14 and the punch 26 is approximately the same size as the perimeter 16 of the given area 14 to be removed from glass sheet G.

Depending on the preheat temperature of glass sheet G, its thickness, the size of the hole, and the difference in outline spacing between the perimeter 24 of the target portion 22 exposed to the flame and the perimeter 16 of the given area 14, the time needed to heat the given area 14 typically varies from 6 to 17 seconds. When the exposure time is increased or when the flames are applied directly to the perimeter 16 of the given area 14 instead of the target portion 22 only, the temperature of the glass sheet G outside of the given area 14 becomes too high. As a result, when the punch 26 is applied through the glass thickness in said given area 14, the glass sheet G is distorted at both the upper and lower major surfaces around the margin of the hole that is formed from the given area 14 to such an extent that fire polishing both the upper and lower edge of the resulting hole subsequent to the hole punching step is incapable of developing suitable optical properties in the vicinity of the edge corners.

Although not limiting in the present invention, in developing the localized hole heating prior to the punching operation, single port burners are preferable for producing holes whose diameter does not exceed 3/8 inch (0.95 cm.). Large diameter holes are preferably exposed to the burning gases from a slot formed by concentric walls of ring-type burners. The slot in the ring-type burner is approximately 0.010 inch (0.25 mm.) wide and the distance from the outside of the burner to the perimeter of the given area 14 to be drilled through the thickness of the glass G is at least the 0.100 inch (0.25 cm.) minimum limitation discussed previously.

When the heated glass is punched, it is desirable to punch through the thickness of the glass as fast as possible. This helps maintain a straight line wall configuration for the hole extending through the glass thickness.

The temperature of the target portion 22 heated by the burners 10 and 12 is not required to be controlled because that portion of the glass sheet is eventually removed. However, it is absolutely necessary that the temperature of the perimeter portion 16 when the given area 14 is removed from the glass be at the softening temperature of the glass throughout its thickness and that the portion immediately outside the perimeter 16 be at a lower rather than a higher temperature than the peripheral portion of the given area 14. Therefore, the benefit of having burners provide a flame of burning gas that is smaller than the perimeter of the area 14 to be removed when the glass is punched is important to the success of this invention.

The distance from the exit of the fuel gas/oxygen burner to the adjacent glass surface during hole heating is critical. A greater spacing obtains slower results with a given flame temperature and speed of application of the burning gases. The glass temperature in the region surrounding the perimeter 16 of given area 14 must be kept well below 2550°F. (1399°C.) or bubbling and reboil are experienced. Also, more natural gas than a stoichiometric mixture develops a reducing property in the burning gas and reduces the tendency for bloom to form on the surface of the glass that has been exposed to tin during the formation of float glass. The bloom is a hazy surface believed to result from the migration of tin into the glass surface due to the high temperature at which the glass is heated.

While rapid punching is needed to maximize the production rate of punched glass sheets, the rapid rate forms a protuberance or bulb 30 surrounding the lower surface of the glass sheet through which the punch leaves the thickness of the glass as shown in Fig. 4. In addition, there is a small imprint 32 having a ragged edge 34 around the edge of the hole due to the supporting surface 36 of the die 28. The imprinting is a result of the glass sheet G deflecting downwardly as during the hole punching operation. The bulbing is a result of the heat softened glass flowing outwardly around the surface 36 as the punch 26 penetrates the glass sheet G. In the present invention, the lower surface 20 of the glass G in the vicinity of the removed given area 14 is fire polished at a temperature between the strain point and less than the reboil temperature for approximately two to four seconds to smooth the edge 34 and reduce the size of bulb 30 and imprint 32.

It should be noted that if the flame is applied to the perimeter 16 of the given area 14, bulbs form on both the edge corners of the hole along the upper and lower major surfaces. This would require fire polishing of both the upper corner between the wall 38 and the upper major surface 18, and the lower corner between the wall 38 and the lower major surface 20. However, in the preferred embodiment of the invention wherein the flame during the target portion heating step is within the outline of the given area 14, it is only necessary to fire polish the edge corner at the lower major surface 20 to reduce the lower bulb 30 and to a smooth and round edge corner 34.

The flame polishing is performed using a special burner 40 which directs a "soft flame" of burning gas upwardly against the bulb 30 and surrounding vicinity at a temperature and time necessary to fire polish edge of the hole as depicted in Fig. 5 and discussed above. A lower burning gas temperature at burner 40 is provided by including additional air to lower the temperature of the impinging burning gas and the flame polishing is applied preferably for only two to four seconds, but may be applied for from one to seven seconds. It has been observed that sufficient flame polishing may blend the bulb 30, imprint 32, and edge 34 into a uniform, smooth curved edge. The glass G is heated by the special burner 40 to a lower temperature than the temperatures from the burning gases applied through the top burner 10 and the bottom burner 12 during the hole heating step.

In the operation of this invention, glass sheets G having a thickness of 2.3 mm. provided with 1/8 inch (0.32 cm.) diameter holes were positioned on horizontal support 42 and heated preferably for four seconds prior to the punching step; seven seconds for thicknesses of 3.5 mm. to 4 mm. and eight to nine seconds for glass sheets having a thickness of 5.6 mm. The heating was done at a temperature in excess of 3000°F. (1649°C.) using a fuel gas/oxygen mixture which may be moderated to a slight degree by adding slightly more gas. The distance from the burners to the glass surface for the hole heat step is preferably between 1/8 inch and 1/4 inch (0.32 to 0.64 cm.).

In one particular embodiment of the invention, the punch 26 provided a force of 150-350 lbs. per linear inch (26.8-62.6 kg. per linear cm.) of the perimeter, within less than 2 seconds from the end of the direct exposure of said target area 50 to said flames, and usually started in less than one second following the end of said hole heating step. The glass was completely penetrated in less than one second. The punch force per linear inch ranged from 337 lbs. per linear inch (60.3 kg. per linear cm.) for a circular hole having a 1.037 inch perimeter (2.63 cm.) to 222 lbs. per linear inch (39.7 kg. per linear cm.) for a circular hole having a 1.571 inch perimeter (3.99 cm.) to 193 lbs. per linear inch (34.5 kg. per linear cm.) for a circular hole of 1.806 inch perimeter (4.59 cm.). A keyhole opening having a perimeter of 2.237 inches (5.68 cm.) used a load of 156 lbs. per linear inch (27.9 kg. per linear cm.) to rapidly punch through the plug from the given area 14 where the hole was made.

In order to attain the desired temperature pattern along the given area perimeter through the glass thickness and beyond the given area perimeter, a fuel gas/oxygen mixture having a ratio ranging from less than to more than the stoichiometric ratio of 1 to 2 was used in various experiments.

Circular holes 0.255 inch (0.65 cm.) in diameter were punched through 4 mm. thick glass sheets of Solex® float glass applying a top burner fuel mix of 0.61 cubic feet per hour (0.017 $m^3$ per hour) of fuel gas mixed with 0.95 cubic feet per hour (0.027 $m^3$ per hour) of oxygen to the top surface and 0.48 cubic feet per hour (0.014 $m^3$ per hour) of fuel gas mixed with 0.86 cubic feet per hour (0.024 $m^3$ per hour) of oxygen to the bottom surface for 7 seconds through port burners of 0.0465 inch (0.11 cm.) diameter at a burner to glass distance of 0.25 inch (0.64 cm.), followed by punching and a hand held fire polishing step.

Circular holes 0.125 inch (0.32 cm.) in diameter were punched through clear float glass sheets 2.3 mm. thick by applying a mixture of 0.32 cubic feet per hour (0.009 $m^3$ per hour) of fuel gas and 1.2 cubic feet of oxygen per hour (0.034 $m^3$ per hour) to the top surface and a mixture of 0.39 cubic feet per hour (0.011 $m^3$ per hour) of fuel gas and 1.14 cubic feet per hour (0.032 $m^3$ per hour) of oxygen to the bottom surface through port burners having a diameter of 0.035 inch (0.89 mm.) for 4 seconds at a burner to glass distance of 0.25 inch (0.64 cm.), followed by fire polishing with a hand held burner.

Keyhole slots of elliptical configuration 0.763 inch long by 0.622 inch wide (1.94 cm. by 1.58 cm.) were punched through 4 mm. thick Solex® float glass sheets using a slit oval burner having slit oval slots 0.010 inch (0.25 mm.) wide between an outer elliptical wall 0.570 inch by 0.430 inch (1.45 cm. by 1.09 cm.) and an inner elliptical wall 0.550 inch by 0.410 inch (1.40 cm. by 1.04 cm.) for 10 to 11 seconds of hole heating before punching and fire polishing with a JM-1 hand held fire polish burner supplied by Carlisle Machine Works. The same apparatus was used for keyhole slots through sheets of clear float glass 5.6 mm. thick using a heating duration of 10 to 17 seconds and otherwise the same treatment as for the previous Solex® glass sheets. The burners were held 1/8 inch (0.32 cm.) from the target portions of the areas to be removed.

Other sheets of 4 mm. thick clear float glass were punched with holes of 1/8 inch (0.32 cm.) diameter using port burners having ports of 0.035 inch (0.89 mm.) diameter for 9 seconds preheat followed by punching and then fire polishing at 1 second or 3 seconds with the same port burners. Other sheets of 2.3 mm. thick clear float glass were punched with holes of 1/8 inch (0.32 cm.) diameter using the same port burners for 7 seconds preheat before punching and 3 seconds fire polishing.

Other sheets of 4 mm. thick clear float glass were punched with holes 0.6 inch (1.52 cm.) in diameter using top and bottom slit burners having a slit width of 0.010 inch (0.25 mm.) around a ring having an outer diameter wall of 0.410 inch (1.04 cm.) and an inner diameter wall of 0.390 inch (0.99 cm.) at a rate of fuel gas flow of 0.86 cubic feet per hour (0.024 $m^3$ per hour) mixed with 1.64 cubic feet of oxygen per hour (0.047 $m^3$ per hour) for 8 to 9 seconds followed by punching and 2.5 seconds of fire polishing the bottom edge corners only with the same burners as used in the preheat.

Other sheets of 4 mm. thick float glass were preheated for from 10 to 13 seconds using a standard slit burner with a slit width of 0.010 inch (0.25 mm.) around a ring having an outer diameter of 0.250 inch (0.64 cm.) and an inner diameter of 0.230 inch (0.58 cm.) before the punch and followed by 2.5 seconds of flame polishing with the same burner as used in the latter preheat. Holes with 0.6 inch (1.52 cm.) diameter resulted.

In all of the tests enumerated, the holes had smooth upper edge corners and mild bulging only at the lower edge corners. In contrast, holes 0.33 inch (0.84 cm.) in diameter punched through 4 mm. thick clear float glass sheets using port burners 0.052 inch (0.13 cm.) in diameter feeding 1.24 cubic feet per hour (0.035 $m^3$ per hour) of gas mixed with 2.84 cubic feet per hour (0.81 $m^3$ per hour) of oxygen preheated for 7 seconds before punching developed severe bulging at both the upper edge corners and the lower edge corners. Fire polishing both the upper edge corners and the lower edge corners after the punching step for 3 seconds did not improve the bulging at either edge corner appreciably. In addition, the walls of the holes bowed convexly in elevation using the technique of this paragraph, whereas straight sided walls were formed in holes produced using the various techniques of the previous paragraphs.

Smoothing the bulb 30, imprint 32, and edge 34 at the lower edge corners was accomplished more expeditiously using the fire polish burner depicted in Fig. 6 which shows the burner 40 constructed and arranged to provide the "soft" heating used to fire polish the perimeter of the bottom of the hole. Although not limiting in the present invention, in one particular embodiment two concentric rings of holes 44 and 46 each 0.028 inch (0.71 mm.) diameter are formed by drilling with a #70 drill. Each ring has 18 holes spaced 20° apart with holes 44 and 46 being staggered relative to each other. Holes 44 of the outer ring are positioned along perimeter 16 of given area 14 so that the flame partially impacts the bulb 30, imprint 32, and edge 34 along the bottom of the hole and partially washes along the wall 38 of the hole. The holes 46 of the inner ring are positioned slightly inboard of the outer holes 44 to wash over and further heat treat wall 38. For example, in fire polishing a 0.50 inch (1.27 cm.) diameter hole, holes 44 would be positioned along a 0.25 inch (0.64 cm.) radius and holes 46 would be positioned along a 0.20 inch (0.53 inch) radius. Since the mixture of a fuel gas and air is only enriched by enough oxygen to obtain the temperature desired in a brief fire polishing, preferably of approximately two to four seconds, the portion of the glass in the vicinity of the perimeter of the hole is free of bubbling and reboil and forms a smooth rounded corner such as depicted in Fig. 5. It is understood that a burner 40 having holes at different radii may be used to fire polish the bottom edge corner of punched holes of other diameters. Furthermore, additional rows of holes may be used to perform the fire polishing, however, care must be taken to prevent overheating of the glass which may degrade the optics. The burner 40 is typically held 3/8 inch to 1/2 inch (0.95 to 1.27 cm.) from the burner to the glass G during the fire polishing step to smooth out any bulb that forms at the bottom edge corner of the hole.

It was observed that if the glass sheet G were placed on a flat surface or conveyor rolls before the bulb 30 had solidified, the formed opening in the sheet G and the glass around the opening would distort and/or the surface of the sheet G would be marked. In order to prevent this occurrence, after the flame from burner 40 is cut off, cooling air is blown through holes 44 and 46 to cool the punched area and sufficiently "freeze" the bulb 30 such that the glass sheet G can be processed further without adversely affecting the opening and surrounding area.

Tests were performed to determine the breaking load of 4 mm. glass plates having a 0.588 inch (1.49 cm.) diameter hole. These plates were tested using the well-known concentric ring test wherein the plate is supported between a ring 2 inches (5.08 cm.) in diameter against the upper surface of the glass and a ring 4 inches (10.16 cm.) in diameter against the lower surface of the glass, both rings being concentric with the hole that was formed. Both annealed and tempered glass sheets were tested to determine the force needed to fracture the glass sheets. Annealed glass sheets that were merely drilled at low temperature using core or solid drills had a 205 lbs. (452 kg.) break load on average; those that were drilled at low temperature followed by fire polishing about the upper and lower surfaces had a mean break strength of 396 lbs. (873 kg.); and those that were preheated using the fuel gas/oxygen mixtures that impinged on the glass in a target portion at least 0.100 inch (0.25 cm.) within the outline of the given area to be removed, followed by fire polishing the bottom edge corner only, developed a strength of 467 lbs. (1029 kg.) on average during the break test. Corresponding tests with glass that was tempered after the hole punching or drilling treatment developed results in which glass breakage occurred at an average of 788 lbs. (1737 kg.) break force for glass sheets that were drilled without preheating or subsequent fire polishing, 889 lbs. (1960 kg.) average breakage in sheets subjected to drilling without preheating and followed by fire polishing both surfaces, and 1037 lbs. (2286 kg.) average break force for those plates that were heated with flames impinging target areas having smaller cross-sectional areas than the areas of the holes to be removed by at least 0.100 inch (0.25 cm.), followed by punching and then fire polishing the bottom edge corner only. Thus, the improvement of this invention to provide stronger sheets that had holes drilled in them than the prior art was evident. In addition, it was easier to apply fastening bolts through the resulting cylindrically shaped holes that were formed using the technique of this invention than through holes having convexly shaped inner walls that resulted from hole preheating a target area coextensive with the given area to be removed.

Fig. 7 illustrates an alternate embodiment of the invention aimed at eliminating the bulbing action of the glass. Die 128 is provided with a sharp edge 150 which, after heating but prior to the punching operation, is pushed upwardly into the lower surface of the glass sheet. Die 128 also includes a flat position 152 that extends out beyond the portion of the glass sheet G which is at the softening point temperature. In this fashion, when punch 126 enters the glass sheet G, the softened glass cannot flow beyond the edge 150 of the die 128 as discussed earlier to form a bulge along the lower surface 20 of glass sheet G. However, the type of arrangement may result in minor bulbing on the upper surface 18 which, depending on the severity and intended use of this final glass product, could require fire polishing.

From the foregoing description, a method has been disclosed to develop glass sheets having holes drilled therethrough which are stronger than glass sheets drilled using prior art techniques. While the preferred embodiment as presently known has been disclosed, it is understood that obvious variations may be made in the light of the description that has been presented and that the scope of the invention is defined by the claim subject matter that follows.

## Claims

1. A method of removing a given area from a glass sheet, said given area having a given area perimeter comprising:

   heating a target portion having a target portion perimeter spaced from said given area perimeter for sufficient time to develop a first temperature pattern having a decreasing temperature gradient from said target portion perimeter through said given area perimeter wherein the temperature through the thickness of said glass sheet along said given area perimeter is at least at the softening temperature of said sheet but less than the reboil temperature of said sheet; while

   maintaining remaining portions of said sheet other than said given and target area at a second temperature pattern at which said remaining portions are sufficiently rigid to be handled without marking or otherwise adversely affecting its optical properties and can equalize internal stresses within said sheet during said heating step; and

   driving a punch having an outline approximating said given area perimeter through said glass sheet at said given area while said given area perimeter retains its said first temperature pattern and said remaining portions of said glass sheet retain its said second temperature pattern to remove said given area from said glass sheet.

2. The method as in claim 1 where said sheet develops a ragged edge along a bottom edge where said given area is removed and further including the step of fire polishing said ragged edge at an elevated temperature below said reboil temperature for sufficient time to smooth said edge.

3. The method as in claim 2 wherein said glass sheet develops a bulbed area on a major surface of said sheet surrounding said given area and further wherein said fire polishing step includes fire polishing said bulbed area at an elevated temperature below said reboil temperature for sufficient time to reduce the size of said bulbed area.

4. The method as in claim 3 wherein said fire polishing step includes heating said bottom edge corner to combine said ragged edge and said bulbed area and develop a smooth rounded shape at said bottom edge corner.

5. The method as in claim 1 wherein said heating step includes heating said target area to a temperature such that said first temperature pattern is within the range of about 1235°F. to 2550°F.

6. The method as in claim 5 wherein said maintaining step includes preheating said sheet throughout its extent to a temperature range between about 850°F. and the top of the annealing range of said glass sheet.

7. The method as in claim 5 wherein said heating step includes impinging flames directly against both major surfaces of said glass sheet at said target portion.

8. The method as in claim 7 wherein said flames impinging on said target portion consist essentially of a mixture of fuel gas and oxygen.

9. The method as in claim 8 wherein said mixture is approximately a stoichiometric mixture of said fuel gas and oxygen.

10. The method as in claim 7 further including the step of spacing said target area perimeter inwardly from said given area perimeter such that said temperature gradient decreases in an outward direction from said target portion perimeter through said given area perimeter.

11. The method as in claim 10 wherein said maintaining step includes preheating said sheet throughout its extent to a temperature range between about 850°F. and the top of the annealing range of said glass sheet.

12. The method as in claim 11 wherein said spacing step includes spacing said target portion perimeter inwardly from said given area perimeter by at least 0.100 inch.

13. The method as in claim 11 wherein said glass sheet develops a ragged edge and bulbed area on a major surface of said sheet surrounding said given area and further including the step of fire polishing said ragged edge and bulbed area at an elevated temperature below said reboil temperature for sufficient time to smooth said ragged edge and reduce the size of said bulbed area.

14. The method as in claim 13 further including the step of directing cooling air in the vicinity of said bulbed area to cool said bulbed area.

15. The method as in claim 7 wherein said glass sheet develops a ragged edge and bulbed area on a major surface of said sheet surrounding said given area and further including the step of fire polishing said ragged edge and bulbed area at an elevated temperature below said reboil temperature for sufficient time to smooth said ragged edge and reduce the size of said bulbed area.

16. The method as in claim 15 further including the step of directing cooling air in the vicinity of said bulbed area to cool said bulbed area.

17. The method as in claim 15 wherein the temperature to which said glass sheet is heated at said target area during said heating step is greater than the temperature to which said glass is heated at said bottom edge corner during said fire polishing step.

18. The method as in claim 15 further including the step of restricting bulbing of said major surface during said heating and punching steps.

19. The method as in claim 18 wherein prior to said driving step further including the step of aligning a die with said punch such that said glass sheet is positioned therebetween, partially penetrating said glass sheet with cutting surfaces of said die aligned with said given area perimeter and extending portions of said die beyond said given perimeter to said remaining portion of said glass so as to restrict bulbing of said glass in said remaining portions during said driving step.

20. A glass article made according to claim 1.

21. A glass article made according to claim 15.

22. An apparatus for removing a given area from a glass sheet, said given area having a given area perimeter comprising:
     means to support a glass sheet;
     means to heat a target portion of said sheet having a target portion perimeter spaced from said given area perimeter to establish a first temperature pattern having a decreasing temperature gradient from said target portion perimeter through said given area perimeter wherein the temperature through the thickness of said glass sheet along said given area perimeter is at least at the softening temperature of said sheet but less than the reboil temperature of said sheet;

means to maintain remaining portions of said sheet other than said given and target area at a second temperature pattern at which said remaining portions are sufficiently rigid to be handled without marking or otherwise adversely affecting its optical properties and can equalize internal stresses within said sheet when exposed to heat from said heating means; and

means to sever said glass sheet along said given area perimeter while said given area perimeter retains its said first temperature pattern and said remaining portions of said glass sheet retain its said second temperature pattern to remove said given area from said glass sheet.

23. The apparatus as in claim 22 wherein said glass sheet develops a ragged edge and bulbed area on a major surface of said sheet surrounding said given area and further including means to fire polish said ragged edge and bulbed area at an elevated temperature below said reboil temperature for sufficient time to smooth said ragged edge and size of said bulbed area.

24. The apparatus as in claim 23 wherein said severing means includes a punch and die assembly positioned on opposite sides of glass sheet and aligned with said given area, said punch having a perimeter corresponding to said given area perimeter.

25. The apparatus as in claim 24 wherein said heating means includes a pair of burners positioned to direct flames against both major surfaces of said glass sheet at said target position.

26. The apparatus as in claim 25 wherein said fire polishing means includes a burner positioned to direct flames at said ragged edge and along walls of an opening formed in said glass sheet where said given area is removed.

27. The apparatus as in claim 26 wherein said maintaining means includes means to maintain said sheet throughout its extent to a temperature range between bout 805°F. and the top of the annealing range of said glass sheet.

28. The apparatus as in claim 24 further including means to restrict bulbing of said major surface.

29. The apparatus as in claim 28 wherein said restricting means includes portions of said die which extend beyond said given area perimeter to said remaining portion of said glass and means to drive said die partially into said major surface of said glass sheet so as to restrict bulbing of said glass in said remaining portions.

FIG. 1

FIG. 2

FIG. 3

FIG. 4

FIG. 5

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 270 897 (PPG INDUSTRIES,INC.) <br> * the whole document * <br> --- | 1,20,22 | C03B21/04 |
| A | US-A-1 406 502 (SHAND) <br> * the whole document * <br> --- | 22 | |
| A | DE-A-3 828 539 (KONIG) <br><br> * the whole document * <br><br> ----- | 1,2,22, 25 | |

|  | TECHNICAL FIELDS SEARCHED (Int. Cl.5) |
|---|---|
|  | C03B |

The present search report has been drawn up for all claims

| Place of search | Date of completion of the search | Examiner |
|---|---|---|
| THE HAGUE | 11 FEBRUARY 1992 | VAN DEN BOSSCHE W. |

EPO FORM 1503 03.82 (P0401)